# EUROPEAN PATENT APPLICATION

(11) **EP 4 806 603 A1**
(43) Date of publication of application: **16.09.2026**
(21) Application number: 25202608.3
(22) Date of filing: 16.09.2025
(51) Int. Cl.: B25J 15/00, B25J 15/06

(54) **GRIPPING DEVICES AND METHOD OF OPERATING A GRIPPING DEVICE**

(30) Priority: 14.03.2025 US 202563771778 P
(71) Applicant: Nexera Robotics Corp., North Vancouver BC V7J 2K7 (CA)
(72) Inventor: PENG, Jingyang, Surrey (CA); KRAHN, Jeffrey, Mission (CA); SHEIKHOLESLAMI, Sepehr, Surrey (CA); MENON, Carlo, Zurich (CH); CELIO, Michael, Coquitlam (CA)
(74) Representative: Ege Lee & Roider Patentanwälte

(57) **Abstract**

Gripping device comprising: a chamber having an opening; a membrane module comprising a deformable membrane; an outer header element to which an outer edge of the deformable membrane is attached; an outer socket element attached to the chamber; an outer attachment mechanism enabling attachment and/or detachment of the outer header element to and/or from the outer socket element; wherein the outer attachment mechanism comprises a header side outer attachment mechanism on the outer header element and a socket side outer attachment mechanism on the outer socket element; Gripping device comprising: a shaft; a chamber having an opening; a membrane module comprising a deformable membrane; an inner header element to which an inner edge of the deformable membrane is attached; an inner socket element attached to the shaft; an inner attachment mechanism enabling attachment and/or detachment of the inner header element to and/or from the inner socket element; wherein the inner attachment mechanism comprises a header side inner attachment mechanism on the inner header element and a socket side inner attachment mechanism on the inner socket element; and Method of operating a gripping device according to any of the preceding claims, comprising: positioning the gripping device towards an object to be grasped; creating suction force through depressurization of fluid passages; actuating at least one of a chamber and/or a shaft to deform the membrane; pressurizing a chamber space to conform the membrane to the object; creating grasping force through suction, friction and/or mechanical interlocking.

## Description

The invention relates to a gripping device comprising a chamber having an opening, a membrane module comprising a deformable membrane. Furthermore, the invention relates to a gripping device comprising a shaft, a chamber having an opening, a membrane module comprising a deformable membrane. Furthermore, the invention relates to a method of operating a gripping device.

The rise of automation across industries such as manufacturing, agriculture, e-commerce, and logistics brings about the ever-increasing need of robotic manipulators as well as grippers that will fit onto them. More specifically, the need to grip different kinds of objects with a single gripper arises in many fields. Existing solutions mainly involve the use of finger-type grippers or vacuum cups.

For finger type gripping devices, the gripping force, the direction of approach, and the gripping point on the object need to be well defined to ensure successful gripping while not damaging the object. Furthermore, finger type gripping devices have difficulties gripping objects from a surface of the object that is larger than the maximum opening of the fingers. Also, if a batch of cuboid-shaped boxes are tightly packed, so that all side faces of a box are in full contact with the adjacent boxes, finger type gripping devices cannot get hold of the box from the top because there is no space for the fingers to reach in and get hold of the side faces of the box.

Vacuum cups can grip objects larger than the cup size or pick one box from a batch of tightly packed boxes, and do not have as high demand on gripping force control.

However, since vacuum cups have difficulties gripping objects with shapes such that a seal between the object and the vacuum cup cannot be well established, the types of objects they can grip are limited, and the direction of approach and the gripping point on the object still need to be well defined.

Combining fingers and vacuum cups into a single gripping device, such as that disclosed in US 7409812 B2, can mitigate some of their respective limitations, but the issues regarding the direction of approach and the gripping point remain. Additionally, they very often still fail to grasp a large variety of objects including large surfaces which are not flat.

While several grippers exist, such as finger-type grippers and vacuum cup grippers, none are particularly effective and adapted to work for various types of objects. As such, there is a continued need for a device that can utilize gripping and suction forces to pick up and move a wide variety of objects. Furthermore, there is a continued need for a device that provides continuous attractive forces while an object is being grasped and displaced.

The object underlying the invention is to structurally and/or functionally improve a gripping devices as initially mentioned. Furthermore, the object underlying the invention is to structurally and/or functionally improve a method of operating a gripping device as initially mentioned.

This object is achieved by a gripping device having the features of claim 1. Additionally, the object is achieved by a gripping device having the features of claim 3. Additionally, the object is achieved by a method of operating a gripping device, the method having the features of claim 14. Advantageous embodiments and/or further developments form the subject-matter of the dependent claims.

According to a first aspect of the invention, there is provided a gripping device comprising: a chamber having an opening; a membrane module comprising a deformable membrane; an outer header element to which an outer edge of the deformable membrane is attached; an outer socket element attached to the chamber; and an outer attachment mechanism enabling attachment and/or detachment of the outer header element to and/or from the outer socket element; wherein the outer attachment mechanism comprises a header side outer attachment mechanism on the outer header element and a socket side outer attachment mechanism on the outer socket element.

Gripping device may be configured as a robotic end-effector or manipulation tool. The device may be mounted to robotic manipulators, industrial automation systems, or manual handling equipment.

Chamber having an opening may comprise a hollow housing structure. The chamber may have cylindrical, conical, or polygonal internal geometry. The opening may serve as a working aperture through which objects are approached and grasped.

Membrane module comprising a deformable membrane may include flexible materials such as elastomers, thermoplastic materials, or rubber compositions. The deformable membrane may exhibit elastic properties enabling reversible shape changes under pressure differentials.

Outer header element may be fabricated from rigid materials including metals, engineering plastics, or composite materials. The element may provide structural mounting points and fluid connections.

Outer edge of the deformable membrane is attached may be achieved through mechanical clamping, adhesive bonding, overmolding, or welded connections. The attachment may create hermetic sealing between membrane and header element.

Outer socket element attached to the chamber may utilize threaded connections, bayonet mounts, or interference fits. The socket element may be permanently or removably attached to the chamber structure.

Outer attachment mechanism may comprise mechanical, magnetic, or pneumatic coupling systems. The mechanism may enable tool-free or tool-assisted connection/disconnection operations.

Header side outer attachment mechanism may include protruding elements, recessed features, or complementary coupling geometries located on the outer header element.

Socket side outer attachment mechanism may comprise matching receptacles, engagement surfaces, or complementary coupling features integrated into the outer socket element.

Alternative features: Outer header element may alternatively be attached directly to chamber walls. Socket element may incorporate integral fluid manifolds. Attachment mechanisms may include quarter-turn fasteners or cam-actuated locks.

The outer attachment mechanism may be selected from: a radial ball lock with lifting sleeve mechanism; a tangential ball lock with rotating sleeve mechanism; a radial ball lock with rotating sleeve mechanism; or a bayonet lock with rotating sleeve mechanism.

Radial ball lock with lifting sleeve mechanism may employ spherical locking elements that engage radially. The lifting sleeve may move axially to control ball engagement and disengagement.

Tangential ball lock with rotating sleeve mechanism may utilize balls that engage in tangential directions. The rotating sleeve may provide cam-actuated ball positioning through rotational motion.

Radial ball lock with rotating sleeve mechanism may combine radial ball engagement with rotational actuation. The sleeve rotation may control radial ball positioning through cam surfaces.

Bayonet lock with rotating sleeve mechanism may employ helical cam tracks and follower elements. Quarter-turn or partial rotation may achieve locking and unlocking operations.

Alternative features: Attachment mechanisms may alternatively include magnetic coupling systems, pneumatic coupling devices, or spring-loaded engagement mechanisms. Locking may be achieved through linear motion, rotational motion, or combined motion patterns.

According to a second aspect of the invention, there is provided a gripping device comprising: a shaft; a chamber having an opening; a membrane module comprising a deformable membrane; an inner header element to which an inner edge of the deformable membrane is attached; an inner socket element attached to the shaft; and an inner attachment mechanism enabling attachment and/or detachment of the inner header element to and/or from the inner socket element; wherein the inner attachment mechanism comprises a header side inner attachment mechanism on the inner header element and a socket side inner attachment mechanism on the inner socket element.

Shaft may comprise a cylindrical rod, hollow tube, or profiled beam. The shaft may be constructed from metallic materials, composite materials, or engineering plastics.

Inner header element may be dimensionally smaller than the outer header element. The inner element may provide central mounting and fluid distribution functions.

Inner edge of the deformable membrane is attached may create a central aperture or opening in the membrane structure. The attachment may enable differential pressure application across membrane surfaces.

Inner socket element attached to the shaft may utilize threaded connections, press fits, or mechanical fasteners. The socket may be positioned at the shaft terminus or at intermediate locations.

Inner attachment mechanism may operate independently from outer attachment mechanisms. The inner mechanism may utilize different coupling principles or actuating forces.

Alternative features: Shaft may alternatively comprise telescoping sections, flexible sections, or articulated segments. Inner socket element may incorporate rotational bearings or sliding interfaces.

The inner attachment mechanism may be selected from: a radial ball lock mechanism; a latching mechanism; or a preloaded bayonet lock mechanism.

Radial ball lock mechanism may employ fewer balls than outer mechanisms due to size constraints. The mechanism may utilize simplified actuating systems.

Latching mechanism may comprise spring-loaded hooks, detents, or cam followers. Manual or automated actuation may be provided for engagement/disengagement.

Preloaded bayonet lock mechanism may incorporate spring preloading for automatic engagement. Rotational motion may be required for disengagement operations.

Alternative features: Inner attachment may alternatively utilize magnetic coupling, friction coupling, or adhesive bonding. Mechanisms may incorporate position feedback sensors or engagement indicators.

According to a third aspect of the invention, there is provided a gripping device combining the features of the first and/or second aspects, wherein: the deformable membrane is an open surface having an outer edge and an inner edge defining at least one hole; the outer edge is attached to the outer header element; the inner edge is attached to the inner header element; and the deformability of the membrane allows relative movement between the outer header element and the inner header element.

Open surface having an outer edge and an inner edge defining at least one hole may create annular or ring-shaped membrane geometries. The hole may be circular, elliptical, or polygonal in shape.

Relative movement between the outer header element and/or the inner header element may be achieved through differential actuation. The movement may be linear, rotational, or combined motion patterns.

Deformability of the membrane may be characterized by elastic modulus, tensile strength, and elongation properties. The membrane may exhibit non-linear deformation characteristics.

Alternative features: Membrane may alternatively comprise multiple holes or apertures. Membrane thickness may vary across the surface. Reinforcement elements may be embedded within the membrane material.

The gripping device may further comprise an inner suction cup configured to form a seal against an object to be grasped, wherein the inner suction cup is attached to either the inner header element or the inner socket element.

Inner suction cup configured to form a seal against an object may comprise flexible lip seals, bellows configurations, or conformable contact surfaces. The cup may accommodate various object surface geometries.

Attached to either an inner header element or an inner socket element may provide mounting flexibility for different application requirements. The attachment may be permanent or removable.

Alternative features: Inner suction cup may alternatively comprise multiple smaller suction elements. Cup geometry may be conical, spherical, or customized for specific object shapes. Suction cup materials may be selected for chemical compatibility or temperature resistance.

The gripping device may further comprise an outer suction cup configured to surround the membrane module and form a seal against a large object to be grasped, wherein the outer suction cup is attached to either the outer header element or the outer socket element.

Outer suction cup configured to surround the membrane module may provide peripheral sealing around large objects. The cup may have annular or ring-shaped geometry.

Form a seal against an object to be grasped may accommodate flat, curved, or irregular object surfaces. The seal may operate at various pressure differentials.

Alternative features: Outer suction cup may alternatively comprise segmented sections for improved flexibility. Multiple outer suction cups may be provided for redundancy. Cup surfaces may incorporate texture or patterns for enhanced sealing.

The gripping device may further comprise a stopper element configured to prevent the deformable membrane from deforming to an extent that blocks an inner header fluid passage, wherein the stopper element is attached to one of: the inner header element, the inner socket element, or the inner suction cup.

Stopper element configured to prevent the deformable membrane from deforming may limit excessive membrane deflection. The stopper may prevent membrane contact with internal components.

Blocks an inner header fluid passage may maintain fluid flow continuity during operation. The stopper may prevent flow restrictions or blockages.

Attached to one of: inner header element, inner socket element, or inner suction cup may provide various mounting options for different configurations.

Alternative features: Stopper element may alternatively comprise multiple discrete stoppers or continuous surfaces. Stopper surfaces may be contoured to guide membrane deformation. Adjustable stoppers may accommodate different operating conditions.

The outer header element may comprise at least one outer header fluid passage and the outer socket element may comprise at least one outer socket fluid passage, wherein when attached, each outer header fluid passage forms a hermetic connection with an outer socket fluid passage.

Outer header fluid passages may comprise drilled channels, molded passages, or machined conduits. Multiple passages may provide redundancy or different fluid functions.

Outer socket fluid passages may align with header passages during attachment. The passages may incorporate sealing surfaces or gasket grooves.

Hermetic connection may prevent fluid leakage between components. The connection may operate at various pressure and temperature conditions.

Alternative features: Fluid passages may alternatively utilize flexible tubing or rotary unions. Quick-disconnect couplings may be integrated into passage designs. Passages may incorporate flow control elements or filtration components.

The inner header element may comprise at least one inner header fluid passage and the inner socket element may comprise at least one inner socket fluid passage, wherein when attached, each inner header fluid passage forms a hermetic connection with an inner socket fluid passage.

Similar considerations apply as for Claim 9, with appropriate scaling for inner component dimensions.

Alternative features: Inner passages may alternatively comprise coaxial tube arrangements or integrated manifold designs.

For the radial ball lock with lifting sleeve mechanism, the attachment tenons may comprise locking grooves configured to engage with outer locking elements, and the outer socket element may comprise internal locking pieces, a lifting locking sleeve, and springs providing preload forces.

Attachment tenons comprise locking grooves may provide positive engagement features. The grooves may have tapered profiles for guided engagement.

For the radial ball lock mechanism, the header side mechanism may comprise a core with a locking groove, and the socket side mechanism may comprise locking elements, inner and outer locking sleeves, and unlocking levers.

Outer locking elements may comprise balls, rollers, or shaped cam followers. The elements may be spring-loaded or actuator-controlled.

Core with a locking groove may provide central engagement features for radial ball lock mechanisms. The groove profile may optimize engagement forces.

Unlocking levers may provide manual or automated disengagement capability. The levers may incorporate ergonomic features or tool interfaces.

Alternative features: Locking elements may alternatively comprise magnetic components, friction elements, or shape-memory alloy actuators. Grooves may incorporate multiple engagement positions for indexing or adjustment.

The gripping device may further comprise: a chamber actuating mechanism configured to move the chamber; a shaft actuating mechanism configured to move the shaft; and a chamber pressure mechanism configured to control pressure within a chamber space.

Chamber actuating mechanism configured to move the chamber may comprise pneumatic cylinders, electric motors, or hydraulic actuators. Linear or rotational motion may be provided.

Shaft actuating mechanism configured to move the shaft may operate independently from chamber actuation. The mechanism may provide precise positioning or force control.

Chamber pressure mechanism configured to control pressure within a chamber space may utilize pressure regulators, valves, or pump systems. The mechanism may maintain constant or variable pressure conditions.

Alternative features: Actuation mechanisms may alternatively comprise servo motors, stepper motors, or manual actuators. Pressure control may incorporate feedback sensors or closed-loop control systems.

According to a further aspect of the invention, there is provided a method of operating the gripping device, comprising: positioning the gripping device towards an object to be grasped; creating suction force through depressurization of fluid passages; actuating at least one of the chamber or shaft to deform the membrane; pressurizing the chamber space to conform the membrane to the object; and creating grasping force through suction, friction and/or mechanical interlocking.

Positioning the gripping device towards an object may utilize visual guidance, force feedback, or pre-programmed trajectories. The positioning may accommodate various object orientations.

Creating suction force through depressurization may utilize vacuum pumps, venturi systems, or pressure differentials. The suction may be applied selectively to different areas.

Actuating at least one of a chamber and/or a shaft to deform the membrane may create conformal contact with object surfaces. The actuation may be coordinated or sequential.

The method may further comprise selectively operating in different modes: a membrane mode using both the deformable membrane and inner suction cup; a suction cup mode using only the inner suction cup; or an outer suction cup mode using the outer suction cup for large objects.

Different modes may be selected based on object characteristics, size, or material properties. Mode selection may be automated or operator-controlled.

Alternative features: Operating methods may alternatively incorporate force sensing, slip detection, or adaptive grip control. Multiple objects may be grasped simultaneously in array configurations.

The gripping device is adapted to provide gripping and suction force for picking up and moving a wide variety of objects. The gripping device is composed of a chamber, a shaft, a membrane module, a chamber actuation mechanism, a shaft actuation mechanism, a chamber pressure mechanism, and a shaft pressure mechanism. The membrane module comprises at least a deformable membrane, an inner header element, an inner socket element, an outer header element, and an outer socket element. The membrane module may further comprise an inner suction cup, an outer suction cup, or a stopper element. The inner header element can be easily attached to or detached from the inner socket element using a variety of inner attachment mechanisms. The outer header element can be easily attached or detached from the outer socket element using a variety of outer attachment mechanisms.

The invention achieves or improves an enhanced versatility and adaptability, a rapid reconfiguration capability, an operational efficiency through intelligent design and/or a system reliability and maintainability. In particular, the invention achieves or improves superior object handling range, rapid tool change capability, multiple gripping modes, enhanced sealing performance, fail-safe design features, automation compatibility, maintenance advantages and/or economic benefits. These advantages directly address the industry need for flexible, efficient, and reliable gripping solutions in automated manufacturing, logistics, and material handling applications, providing both immediate operational benefits and long-term strategic value.

Embodiments of the invention are described in greater detail below with reference to figures, wherein, schematically and by way of example:
- Fig. 1: is a diagram illustrating a basic configuration of the membrane module or an exemplary embodiment.
- Fig. 2: is a diagram illustrating the basic configuration of the membrane module, showing the inner and outer components can move relatively.
- Fig. 3: is a cross-section diagram illustrating the Inner header element with inner attachment interface in the form of a radial ball lock mechanism. Deformable membrane not shown.
- Fig. 4: is a cross-section diagram illustrating the inner header element with inner attachment interface in the form of a latching mechanism. Deformable membrane not shown.
- Fig. 5: is a cross-section diagram illustrating the inner header element with inner attachment interface in the form of a preloaded bayonet lock mechanism. Deformable membrane not shown. Cross section.
- FIG. 6: is a diagram illustrating an exploded view of the inner suction cup assembly.
- Fig. 7: is a diagram illustrating the bottom-side view and top-side view of an outer socket element.
- Fig. 8: is a diagram illustrating the top-side view and bottom view of an outer header element with deformable membrane and outer suction cup attached.
- Fig. 9: is a diagram illustrating an exploded view of the embodiment of the outer suction cup attachment assembly.
- Fig. 10: is a diagram illustrating an outer socket element with the outer attachment interface being a radial ball lock with lifting sleeve mechanism.
- Fig. 11: is a diagram illustrating an outer header element with the outer attachment interface being a tangential ball lock with rotating sleeve mechanism. Deformable membrane and outer suction cup attached.
- Fig. 12: is a diagram illustrating an outer header element with the outer attachment interface being a radial ball lock with rotating sleeve mechanism. Deformable membrane and outer suction cup attached.
- Fig. 13: is a diagram illustrating an outer header element with the outer attachment interface being a bayonet lock with rotating sleeve mechanism. Deformable membrane and outer suction cup attached.
- Fig. 14: is a diagram illustrating a whole membrane module with the outer attachment interface being a bayonet lock with rotating sleeve mechanism and the inner attachment interface being a preloaded bayonet mechanism.
- Fig. 15: is a diagram illustrating a whole membrane module with the outer attachment interface being a bayonet lock with rotating sleeve mechanism and the inner attachment interface being a preloaded bayonet mechanism as mounted to a gripping device.

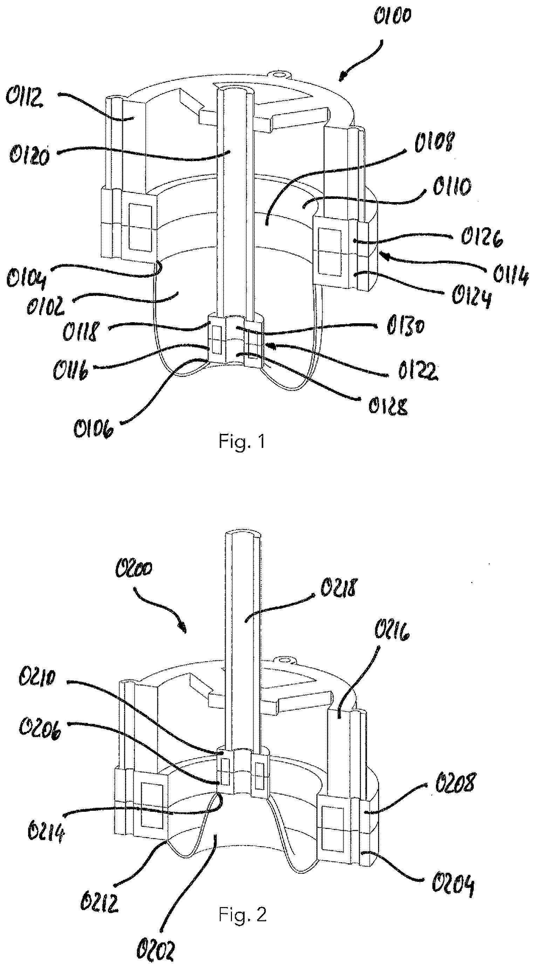

Figure 1 shows the basic configuration of a membrane module 0100 according to an exemplary embodiment. The membrane module 0100 comprises a deformable membrane 0102 in the form of an open surface with an outer edge 0104 and at least one hole which defines an inner edge 0106. An outer header element 0108 is ,provided to which the outer edge 0104 of the deformable membrane 0102 is attached. An outer socket element 0110 is attached to gripping device components 0112. The outer header element 0108 can be attached to or detached from the outer socket element 0110 by an outer attachment interface 0114. An inner header element 0116 is provided to which the inner edge 0106 of the deformable membrane 0102 is attached. An inner socket element 0118 is attached to gripping device components 0120. The inner header element 0116 can be attached to or detached from the inner socket element 0118 by an inner attachment interface 0122. Outer header fluid passages 0124 and outer socket fluid passages 0126 provide hermetic fluid connections when attached. Inner header fluid passages 0128 and inner socket fluid passages 0130 similarly provide hermetic fluid connections.

Figure 2 illustrates the basic configuration of the membrane module 0200, showing how the inner and outer components can move relatively. The deformable membrane 0202 allows relative movement between the outer header element 0204 and inner header element 0206, or relative movement between the outer socket element 0208 and the inner socket element 0210. The deformability of the deformable membrane 0202 enables the outer socket element 0208 and the attached outer header element 0204 with the outer edge 0212 of the deformable membrane 0202 to move relative to the inner socket element 0210 and the attached inner header element 0206 with the inner edge 0214 of the deformable membrane 0202, under the effect of relative movement between gripping device components 0216 and 0218.

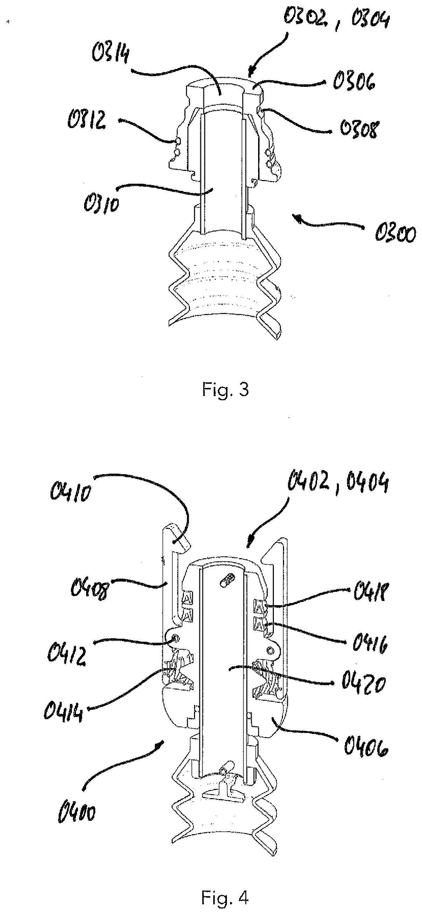

Figure 3 shows a cross-section view of an inner header element 0300 with a header side inner attachment interface 0302 in the form of a radial ball lock mechanism 0304. The header side inner attachment interface 0302 comprises a core 0306 with a locking groove 0308 configured to engage with locking elements on a corresponding socket side inner attachment interface. A tube connector 0310 is fixed to the core 0306 for attachment of an inner suction cup. Sealing structures 0312 such as O-rings are provided to create seals between inner socket fluid passages and inner header fluid passages. An inner header fluid passage 0314 extends through the core 0306 to enable fluid communication.

Figure 4 displays a cross-section view of an inner header element 0400 with an inner attachment interface 0402 in the form of a latching mechanism 0404. The header side inner attachment interface 0402 comprises a latching core 0406 and one or more latching arms 0408. Each latching arm 0408 has a latching hook 0410 on one end and can pivot around an axle 0412 fixed to the latching core 0406. Each latching arm 0408 is preloaded by at least one spring 0414 so that the latching hook 0410 tends to move laterally towards the longitudinal axis of the inner header element 0400. Sealing elements 0416, 0418 are provided to create seals between inner socket fluid passages and inner header fluid passages 0420.

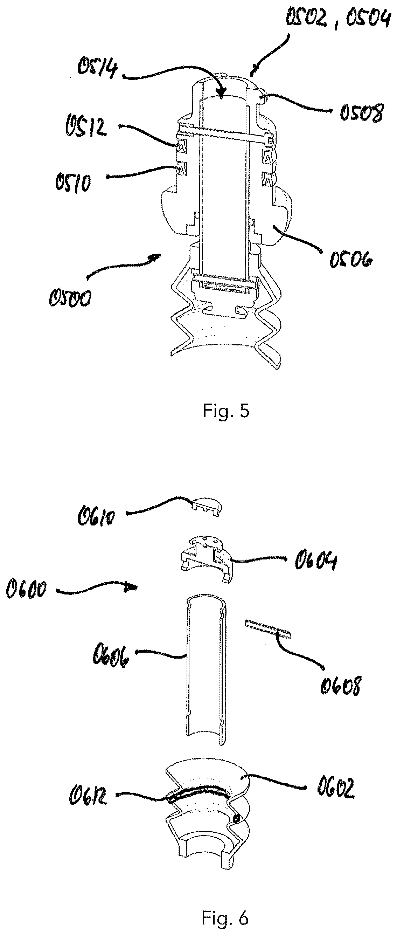

Figure 5 presents a cross-section view of an inner header element 0500 with an inner attachment interface 0502 in the form of a preloaded bayonet lock mechanism 0504. The header side inner attachment interface 0502 comprises a bayonet lock core 0506 with one or more tongues 0508. Sealing elements 0510, 0512 are provided to create seals between inner socket fluid passages and inner header fluid passages 0514. The bayonet lock core 0506 is configured to engage with corresponding locking cams on a socket side inner attachment interface through rotational and axial movement.

Figure 6 shows an exploded view of an inner suction cup assembly 0600. The assembly comprises an inner suction cup 0602, a stopper element 0604, and a stem 0606. The stopper element 0604 is fixed to one end of the stem 0606 by a pin 0608. The inner suction cup 0602 is configured to be pushed onto the other end of the stem 0606 until stopped by the stopper element 0604. Soft padding 0610 is provided on the stopper element 0604 to provide a soft contact surface. The assembly may include an inner cup support ring 0612 to prevent the inner suction cup 0602 from collapsing under external forces.

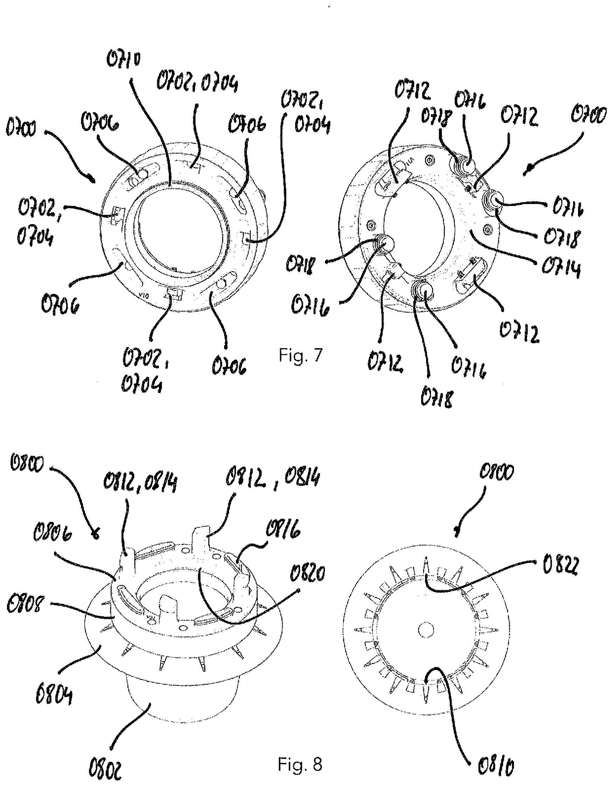

Figure 7 illustrates the bottom-side view left and top-side view right of an outer socket element 0700. The bottom side comprises socket side outer attachment interface 0702 in the form of attachment mortises 0704 configured to mate with attachment tenons on an outer header element. Fluid passage sockets 0706 are configured to mate with fluid passage headers to connect outer socket fluid passages to outer header fluid passages. Central sealing elements 0710 form seals with header side central sealing surfaces. The top side comprises fastening features 0712 for securing to gripping device components, a socket side central sealing surface 0714, and socket fluid passage entry ports 0716 with sealing elements 0718.

Figure 8 depicts the top-side view left and bottom view right of an outer header element 0800 with deformable membrane 0802 and outer suction cup 0804 attached. The outer header element 0800 comprises an outer header main body 0806, an outer suction cup attachment ring 0808, and a membrane clamping ring 0810. The header side outer attachment interface 0812 includes attachment tenons 0814 and fluid passage headers 0816 with sealing elements. A header side central sealing surface 0820 forms seals with central sealing elements on the outer socket element. Suction ports 0822 are positioned around the outer edge of the deformable membrane 0802 for fluid communication.

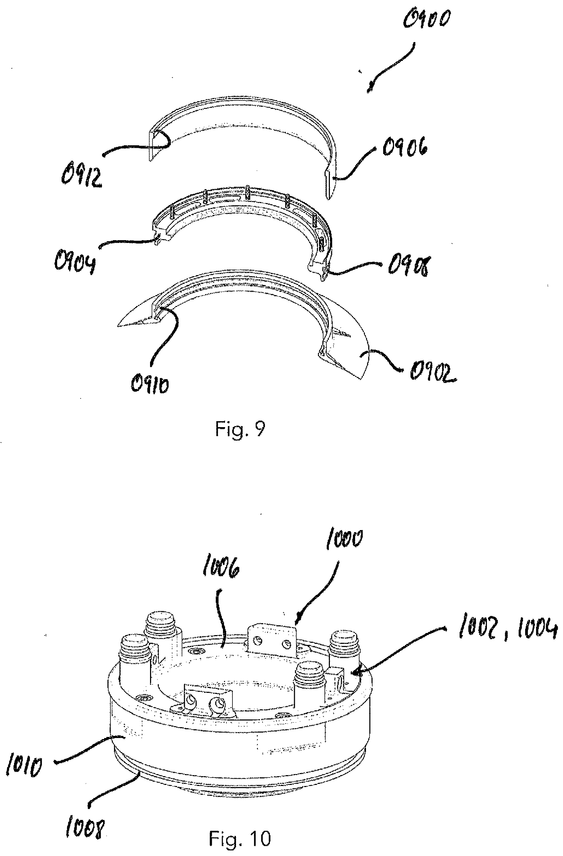

Figure 9 shows an exploded view of an outer suction cup attachment assembly 0900. The assembly comprises an outer suction cup 0902, a membrane clamping ring 0904, and an outer suction cup attachment ring 0906. The outer suction cup 0902 attaches to the membrane clamping ring 0904 with ridges 0908 on the membrane clamping ring 0904 engaging grooves 0910 on the internal surface of the outer suction cup 0902. The outer suction cup attachment ring 0906 has an internal lip 0912 that catches on the edge of the membrane clamping ring 0904 to properly locate the components relative to each other.

Figure 10 illustrates an outer socket element 1000 with an outer attachment interface 1002 in the form of a radial ball lock with lifting sleeve mechanism 1004. The outer socket element 1000 comprises an outer socket top block 1006, an outer socket bottom block 1008, a lifting locking sleeve 1010, internal locking pieces, and outer locking elements. Guide shafts and springs facilitate smooth operation of the lifting locking sleeve 1010. Springs provide preload forces for the internal locking pieces. The outer socket bottom block 1008 includes pockets, recesses, and holes to accommodate the various components and enable the locking mechanism operation.

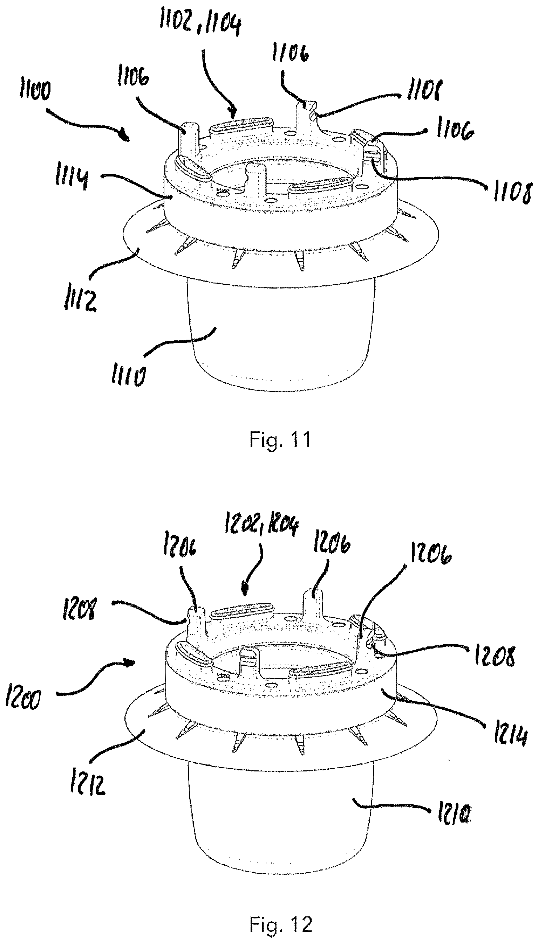

Figure 11 presents an outer header element 1100 with an outer attachment interface 1102 in the form of a tangential ball lock with rotating sleeve mechanism 1104. The outer header element 1100 includes attachment tenons 1106 with locking grooves 1108 facing tangentially to engage with outer locking elements on the outer socket element. A deformable membrane 1110 and outer suction cup 1112 are attached to the outer header element 1100. The outer header main body 1114 supports the attachment tenons 1106 and provides structural integrity for the assembly.

Figure 12 shows an outer header element 1200 with an outer attachment interface 1202 in the form of a radial ball lock with rotating sleeve mechanism 1204. The outer header element 1200 comprises attachment tenons 1206 with locking grooves 1208 facing radially outward to engage with outer locking elements. A deformable membrane 1210 and outer suction cup 1212 are attached to the outer header element 1200. The outer header main body 1214 is configured with thinner attachment tenons 1206 in the radial direction to accommodate external locking pieces without increasing external diameter.

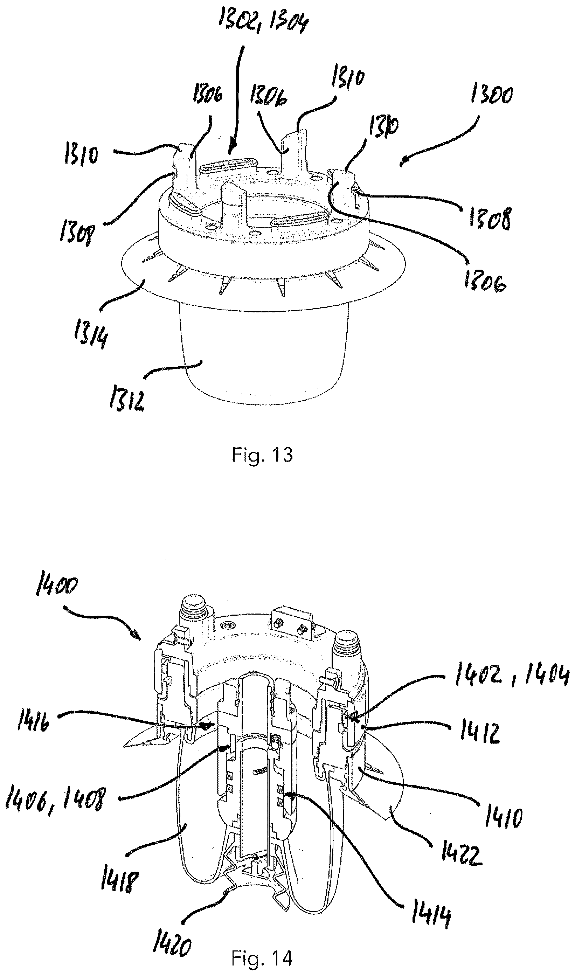

Figure 13 displays an outer header element 1300 with an outer attachment interface 1302 in the form of a bayonet lock with rotating sleeve mechanism 1304. The outer header element 1300 includes attachment tenons 1306 with locking grooves 1308 and unlocking cam surfaces 1310. The locking grooves 1308 engage with locking protrusions on a rotating locking sleeve, while the unlocking cam surfaces 1310 engage with unlocking protrusions. A deformable membrane 1312 and outer suction cup 1314 are attached to the outer header element 1300.

Figure 14 illustrates a complete membrane module 1400 with an outer attachment interface 1402 in the form of a bayonet lock with rotating sleeve mechanism 1404 and an inner attachment interface 1406 in the form of a preloaded bayonet mechanism 1408. The complete assembly shows the integration of the outer header element 1410, outer socket element 1412, inner header element 1414, inner socket element 1416, and deformable membrane 1418. An inner suction cup 1420 and outer suction cup 1422 are incorporated into the complete membrane module 1400.

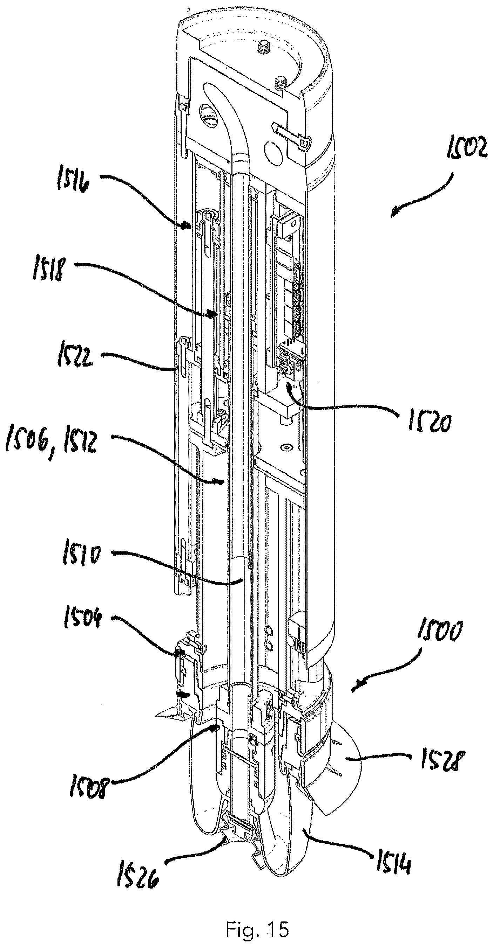

Figure 15 depicts a complete membrane module 1500 mounted to a gripping device 1502. The outer socket element 1504 is mounted to a chamber component of the gripping device 1502, and the inner socket element 1508 is mounted to a shaft component 1510. A chamber space 1512 is enclosed by the chamber 1506, shaft 1510, and deformable membrane 1514. The gripping device 1502 includes a chamber actuating mechanism 1516, a shaft actuating mechanism 1518, a chamber pressure mechanism 1520, and a gripper framing structure 1522. Fluid passages provide communication for creating suction forces at the inner suction cup 1526 and outer suction cup 1528.

## Claims

1. Gripping device comprising:
- a chamber (1506, 1512) having an opening;
- a membrane module (0100, 0200, 1400, 1500) comprising a deformable membrane (0102, 0202, 0802, 1110, 1210, 1312, 1418, 1514);
- an outer header element (0108, 0204, 0800, 1100, 1200, 1300, 1410) to which an outer edge (0104, 0212) of the deformable membrane (0102, 0202, 0802, 1110, 1210, 1312, 1418, 1514) is attached;
- an outer socket element (0110, 0208, 0700, 1000, 1412, 1504) attached to the chamber (1506, 1512);
- an outer attachment mechanism (0114, 0702, 0812, 1002, 1102, 1202, 1302, 1402) enabling attachment and/or detachment of the outer header element (0108, 0204, 0800, 1100, 1200, 1300, 1410) to and/or from the outer socket element (0110, 0208, 0700, 1000, 1412, 1504);
wherein the outer attachment mechanism (0114, 0702, 0812, 1002, 1102, 1202, 1302, 1402) comprises a header side outer attachment mechanism (0812, 1102, 1202, 1302) on the outer header element (0108, 0204, 0800, 1100, 1200, 1300, 1410) and a socket side outer attachment mechanism (0702, 1002) on the outer socket element (0110, 0208, 0700, 1000, 1412, 1504).

2. Gripping device according to claim 1, wherein the outer attachment mechanism (0114, 0702, 0812, 1002, 1102, 1202, 1302, 1402) is selected from:
- a radial ball lock with lifting sleeve mechanism (1004);
- a tangential ball lock with rotating sleeve mechanism (1104);
- a radial ball lock with rotating sleeve mechanism (1204); or
- a bayonet lock with rotating sleeve mechanism (1304, 1404).

3. Gripping device comprising:
- a shaft (1510);
- a chamber (1506, 1512) having an opening;
- a membrane module (0100, 0200, 1400, 1500) comprising a deformable membrane (0102, 0202, 0802, 1110, 1210, 1312, 1418, 1514);
- an inner header element (0116, 0206, 0300, 0400, 0500, 1414) to which an inner edge (0106, 0214) of the deformable membrane (0102, 0202, 0802, 1110, 1210, 1312, 1418, 1514) is attached;
- an inner socket element (0118, 0210, 1416, 1508) attached to the shaft (1510);
- an inner attachment mechanism (0122, 0302, 0402, 0502, 1406) enabling attachment and/or detachment of the inner header element (0116, 0206, 0300, 0400, 0500, 1414) to and/or from the inner socket element (0118, 0210, 1416, 1508);
wherein the inner attachment mechanism (0122, 0302, 0402, 0502, 1406) comprises a header side inner attachment mechanism (0302, 0402, 0502) on the inner header element (0116, 0206, 0300, 0400, 0500, 1414) and a socket side inner attachment mechanism on the inner socket element (0118, 0210, 1416, 1508).

4. Gripping device according to claim 3, wherein the inner attachment mechanism (0122, 0302, 0402, 0502, 1406) is selected from:
- a radial ball lock mechanism (0304);
- a latching mechanism (0404); or
- a preloaded bayonet lock mechanism (0504, 1408).

5. Gripping device according to any of the preceding claims, wherein:
- the deformable membrane (0102, 0202, 0802, 1110, 1210, 1312, 1418, 1514) is an open surface having an outer edge (0104, 0212) and an inner edge (0106, 0214) defining at least one hole;
- the outer edge (0104, 0212) is attached to the outer header element (0108, 0204, 0800, 1100, 1200, 1300, 1410);
- the inner edge (0106, 0214) is attached to the inner header element (0116, 0206, 0300, 0400, 0500, 1414);
- the deformability of the membrane allows relative movement between the outer header element (0108, 0204, 0800, 1100, 1200, 1300, 1410) and/or the inner header element (0116, 0206, 0300, 0400, 0500, 1414).

6. Gripping device according to any of the preceding claims, further comprising:
- an inner suction cup (0602, 1420, 1526) configured to form a seal against an object to be grasped;
wherein the inner suction cup (0602, 1420, 1526) is attached to either an inner header element (0116, 0206, 0300, 0400, 0500, 1414) or an inner socket element (0118, 0210, 1416, 1508).

7. Gripping device according to any of the preceding claims, further comprising:
- an outer suction cup (0804, 0902, 1112, 1212, 1314, 1422, 1528) configured to surround the membrane module (0100, 0200, 1400, 1500) and form a seal against an object to be grasped;
wherein the outer suction cup (0804, 0902, 1112, 1212, 1314, 1422, 1528) is attached to either an outer header element (0108, 0204, 0800, 1100, 1200, 1300, 1410) or an outer socket element (0110, 0208, 0700, 1000, 1412, 1504).

8. Gripping device according to any of the preceding claims, further comprising:
- a stopper element (0604) configured to prevent the deformable membrane (0102, 0202, 0802, 1110, 1210, 1312, 1418, 1514) from deforming to an extent that blocks an inner header fluid passage (0128, 0314, 0420, 0514);
wherein the stopper element (0604) is attached to one of: an inner header element (0116, 0206, 0300, 0400, 0500, 1414), an inner socket element (0118, 0210, 1416, 1508), or an inner suction cup (0602, 1420, 1526).

9. Gripping device according to any of the preceding claims, wherein:
- an outer header element (0108, 0204, 0800, 1100, 1200, 1300, 1410) comprises at least one outer header fluid passage (0124);
- an outer socket element (0110, 0208, 0700, 1000, 1412, 1504) comprises at least one outer socket fluid passage (0126, 0708);
- when attached, each outer header fluid passage (0124) forms a hermetic connection with an outer socket fluid passage (0126, 0708).

10. Gripping device according to any of the preceding claims, wherein:
- an inner header element (0116, 0206, 0300, 0400, 0500, 1414) comprises at least one inner header fluid passage (0128, 0314, 0420, 0514);
- an inner socket element (0118, 0210, 1416, 1508) comprises at least one inner socket fluid passage (0130);
- when attached, each inner header fluid passage (0128, 0314, 0420, 0514) forms a hermetic connection with an inner socket fluid passage (0130).

11. Gripping device according to any of the preceding claims, wherein for a radial ball lock with lifting sleeve mechanism (1004):
- attachment tenons (0814, 1106, 1206, 1306) comprise locking grooves (1108, 1208, 1308) configured to engage with outer locking elements (1014);
- an outer socket element (0110, 0208, 0700, 1000, 1412, 1504) comprises internal locking pieces (1012), a lifting locking sleeve (1010), and springs (0414, 1018, 1020) providing preload forces.

12. Gripping device according to any of the preceding claims, wherein for a radial ball lock mechanism (0304):
- a header side mechanism comprises a core (0306, 0406, 0506) with a locking groove (0308, 1108, 1208, 1308);
- a socket side mechanism comprises locking elements, inner and outer locking sleeves, and unlocking levers.

13. Gripping device according to any of the preceding claims, further comprising:
- a chamber actuating mechanism (1516) configured to move the chamber (1506, 1512);
- a shaft actuating mechanism (1518) configured to move the shaft (1510);
- a chamber pressure mechanism (1520) configured to control pressure within a chamber space (1512).

14. Method of operating a gripping device according to any of the preceding claims, comprising:
- positioning the gripping device towards an object to be grasped;
- creating suction force through depressurization of fluid passages (1524);
- actuating at least one of a chamber (1506, 1512) and/or a shaft (1510) to deform the membrane;
- pressurizing a chamber space (1512) to conform the membrane to the object;
- creating grasping force through suction, friction and/or mechanical interlocking.

15. Method of claim 14, further comprising selectively operating in different modes:
- a membrane mode using both the deformable membrane (0102, 0202, 0802, 1110, 1210, 1312, 1418, 1514) and an inner suction cup (0602, 1420, 1526);
- a suction cup mode using only an inner suction cup (0602, 1420, 1526);
- an outer suction cup mode using an outer suction cup (0804, 0902, 1112, 1212, 1314, 1422, 1528) for large objects.
